# EUROPEAN PATENT APPLICATION

(11) **EP 4 365 743 A1**
(43) Date of publication of application: **08.05.2024**
(21) Application number: 23755705.3
(22) Date of filing: 06.02.2023
(51) Int. Cl.: G06F 11/14, F24F 11/58, F24F 11/64, F24F 11/88, F24F 11/89

(54) **PARAMETER BACKUP METHOD AND APPARATUS FOR AIR CONDITIONING UNIT, AND ELECTRONIC DEVICE**

(30) Priority: 16.02.2022 CN 202210142643
(71) Applicant: Shanghai Kong Intelligent Building Co., Ltd, Shanghai 200080 (CN); GD Midea Heating & Ventilating Equipment Co., Ltd., Foshan, Guangdong 528311 (CN)
(72) Inventor: WU, Kongxiang, Shanghai 200080 (CN); WANG, Mingren, Shanghai 200080 (CN); YAN, Dingxu, Shanghai 200080 (CN); HE, Jiarun, Shanghai 200080 (CN); WANG, Meng, Shanghai 200080 (CN); LI, Hongwei, Shanghai 200080 (CN)
(74) Representative: RGTH
(86) International application number: PCT/CN2023/074652
(87) International publication number: WO 2023/155702

(57) **Abstract**

Disclosed in the present disclosure are a parameter backup method and apparatus for an air conditioning unit, and a backup data acquisition method and system for an air conditioning unit. The backup method includes: monitoring parameter information of an air conditioning unit in real time (S 1); and in response to determining, according to the parameter information, that a key parameter of the air conditioning unit changes, backing up at least the changed key parameter of the air conditioning unit (S2).

## Description

### CROSS-REFERENCE TO RELATED APPLICATION

The present disclosure claims priority to Chinese Patent Application No. 202210142643.4, filed on February 16, 2022, entitled "PARAMETER BACKUP METHOD AND APPARATUS FOR AIR CONDITIONING UNIT, AND ELECTRONIC DEVICE", the entire content of which is incorporated herein by reference.

### TECHNICAL FIELD

The present disclosure relates to the technical field of data backup, and more particularly to a parameter backup method for an air conditioning unit, a backup data acquisition method for an air conditioning unit, a computer-readable storage medium, an electronic device, a terminal device, a parameter backup apparatus for an air conditioning unit and a backup data acquisition system for an air conditioning unit.

### BACKGROUND

With the popularity of intelligence, the existing air conditioning systems gradually enter a networking intelligent control phase, in which the air conditioning device has more and more open parameter setting items. When the original motherboard is damaged, in the process of after-sales motherboard replacement, there are problems that it is easy for the past parameter items to lost or it is difficult to retrieved, resulting in the condition that after-sales engineers need to go through a lot of dialling settings in the maintenance process. Especially when the motherboard has no physical dialling settings, it needs a more complex debugging and recovery process to restore the replaced motherboard to the previous state.

### SUMMARY

The present disclosure aims to solve at least to some extent one of the technical problems existing in the related art. To this end, a first object of the present disclosure is to provide a parameter backup method for an air conditioning unit, capable of backing up in time when a key parameter changes, facilitating device maintenance at a later stage and relieving maintenance pressure.

A second object of the present disclosure is to provide a backup data acquisition method for an air conditioning unit.

A third object of the present disclosure is to provide a computer-readable storage medium.

A fourth object of the present disclosure is to provide an electronic device.

A fifth object of the present disclosure is to provide a computer-readable storage medium.

A sixth object of the present disclosure is to provide a terminal device.

A seventh object of the present disclosure is to provide a parameter backup apparatus for air conditioning units.

An eighth object of the present disclosure is to provide a backup data acquisition system for an air conditioning unit.

In order to achieve the above-mentioned object, an embodiment of a first aspect of the present disclosure provides a parameter backup method for an air conditioning unit, including: monitoring parameter information of the air conditioning unit in real time; and in response to determining, according to the parameter information, that a key parameter of the air conditioning unit changes, backing up at least the changed key parameter of the air conditioning unit.

According to the parameter backup method for an air conditioning unit of the present disclosure, parameter information of the air conditioning unit is monitored in real time, and in response to determining, according to the parameter information, that a key parameter of the air conditioning unit changes, at least the changed key parameter of the air conditioning unit is backed up. To this end, the method is capable of backing up in time when a key parameter changes, facilitating device maintenance at a later stage and relieving maintenance pressure.

In addition, the parameter backup method for an air conditioning unit according to the above-mentioned embodiment of the present disclosure may further have the following additional technical features.

According to some embodiments of the present disclosure, said backing up at least the changed key parameter of the air conditioning unit includes: determining a storage capacity of a networking module corresponding to the air conditioning unit; in response to a determination that the storage capacity is less than or equal to a first preset capacity threshold, backing up the changed key parameter of the air conditioning unit; and in response to a determination that the storage capacity is greater than the first preset capacity threshold, backing up the changed key parameter of the air conditioning unit and a changed functional parameter of the air conditioning unit.

According to some embodiments of the present disclosure, the parameter backup method for an air conditioning unit described above further includes: uploading the backup data to a cloud server.

According to some embodiments of the present disclosure, the backup data in the networking module is cleared in response to receiving an upload success instruction from the cloud server.

According to some embodiments of the present disclosure, the method further includes, prior to said determining, according to the parameter information, that the key parameter of the air conditioning unit changes: receiving a key parameter change instruction issued by the cloud server, and sending the key parameter change instruction to the air conditioning unit.

According to some embodiments of the present disclosure, the key parameter change instruction is repeatedly sent to the air conditioning unit every a first preset time interval in response to the key parameter of the air conditioning unit failing to change.

According to some embodiments of the present disclosure, said backing up at least the changed key parameter of the air conditioning unit includes: in response to a determination that a storage capacity of a networking module corresponding to the air conditioning unit is less than a second preset capacity threshold, sending the changed key parameter of the air conditioning unit to the cloud server for backup.

In order to achieve the above-mentioned object, an embodiment of a second aspect of the present disclosure provides a backup data acquisition method for an air conditioning unit, including: executing the parameter backup method for the air conditioning unit of the embodiment of the first aspect, and determining the backup data; in response to a motherboard of a failed device in the air conditioning unit being replaced, establishing a communication connection between the failed device and an upper computer, and acquiring a list of key parameters needing to be set; and acquiring a corresponding key parameter from the backup data according to the list of key parameters.

According to the backup data acquisition method for an air conditioning unit in the embodiment of the present disclosure, the parameter backup method for the air conditioning unit of the embodiment of the first aspect is executed firstly, and the backup data is determined; then, when a motherboard of a failed device in the air conditioning unit is replaced, a communication connection is established between the failed device and an upper computer, and a list of key parameters needing to be set are acquired and a corresponding key parameter is acquired from the backup data according to the list of key parameters, such that a recovery of the key parameter can be conveniently and quickly realized, and the purpose of intelligently and quickly replacing an after-sales mainboard is achieved.

In addition, the backup data acquisition method for the air conditioning unit according to the above-mentioned embodiment of the present disclosure may further have the following additional technical features.

According to some embodiments of the present disclosure, said acquiring the corresponding key parameter from the backup data according to the list of key parameters includes: acquiring the corresponding key parameter from the networking module according to the list of key parameters; and in response to failing to acquire the corresponding key parameter from the networking module, acquiring the corresponding key parameter from a cloud server.

In order to achieve the above-mentioned object, an embodiment of a third aspect of the present disclosure provides a computer-readable storage medium, on which a parameter backup program for an air conditioning unit is stored. The parameter backup program for the air conditioning unit, when executed by a processor, implements the parameter backup method for the air conditioning unit described above.

The computer-readable storage medium of the embodiment of the present disclosure, by performing the parameter backup method for the air conditioning unit, is capable of backing up in time when a key parameter changes, facilitating device maintenance at a later stage and relieving maintenance pressure.

In order to achieve the above-mentioned object, an embodiment of a fourth aspect of the present disclosure provides an electronic device, including a memory, a processor and a parameter backup program for an air conditioning unit. The parameter backup program is stored on the memory and executable on the processor. The processor, when executing the parameter backup program for the air conditioning unit, implements the parameter backup method for the air conditioning unit described above.

The electronic device according to the embodiment of the present disclosure, by performing the parameter backup method for the air conditioning unit, is capable of backing up in time when a key parameter changes, facilitating device maintenance at a later stage and relieving maintenance pressure.

In order to achieve the above-mentioned object, an embodiment of a fifth aspect of the present disclosure provides a computer-readable storage medium, on which a backup data acquisition program for an air conditioning unit is stored. The backup data acquisition program for the air conditioning unit, when executed by a processor, implements the backup data acquisition method for the air conditioning unit described above.

By executing the above-mentioned backup data acquisition method for the air conditioning unit, the computer-readable storage medium of the embodiments of the present disclosure can easily and quickly realize the recovery of the key parameter, so as to achieve the purpose of intelligently and quickly replacing an after-sales motherboard.

In order to achieve the above-mentioned object, an embodiment of a sixth aspect of the present disclosure provides a terminal device, including a memory, a processor and a backup data acquisition program for an air conditioning unit. The backup data acquisition program is stored on the memory and executable on the processor. The processor, when executing the backup data acquisition program for the air conditioning unit, implements the backup data acquisition method for the air conditioning unit described above.

By executing the above-mentioned backup data acquisition method for the air conditioning unit, the terminal device of the embodiments of the present disclosure can easily and quickly realize the recovery of the key parameter, so as to achieve the purpose of intelligently and quickly replacing an after-sales motherboard.

In order to achieve the above-mentioned object, an embodiment of a seventh aspect of the present disclosure provides a parameter backup apparatus for an air conditioning unit, including: a monitoring module configured to monitor parameter information of the air conditioning unit in real time; and a parameter backup module configured to back up, in response to determining, according to the parameter information, that a key parameter of the air conditioning unit changes, at least the changed key parameter of the air conditioning unit.

According to the parameter backup apparatus for an air conditioning unit of the present disclosure, the monitoring module monitors the parameter information of the air conditioning unit in real time, and the parameter backup module backs up, in response to determining that a key parameter of the air conditioning unit changes according to the parameter information, at least the changed key parameter of the air conditioning unit. To this end, the apparatus is capable of backing up in time when a key parameter changes, facilitating device maintenance at a later stage and relieving maintenance pressure.

In addition, the parameter backup apparatus for the air conditioning unit according to the above-mentioned embodiment of the present disclosure may further have the following additional technical features.

According to some embodiments of the present disclosure, the parameter backup module backing up at least the changed key parameter of the air conditioning unit is specifically configured to: determine a storage capacity of a networking module corresponding to the air conditioning unit; in response to a determination that the storage capacity is less than or equal to a first preset capacity threshold, back up the changed key parameter of the air conditioning unit; and in response to a determination that the storage capacity is greater than the first preset capacity threshold, back up the changed key parameter of the air conditioning unit and a changed functional parameter of the air conditioning unit.

According to some embodiments of the present disclosure, the parameter backup module is further configured to: upload the backup data to a cloud server.

According to some embodiments of the present disclosure, the parameter backup module is further configured to clear the backup data in the networking module in response to receiving an upload success instruction from the cloud server.

According to some embodiments of the present disclosure, the parameter backup module is further configured to: prior to said determining, according to the parameter information, that a key parameter of the air conditioning unit changes, receive a key parameter change instruction issued by the cloud server, and send the key parameter change instruction to the air conditioning unit.

According to some embodiments of the present disclosure, the parameter backup module is further configured to send the key parameter change instruction repeatedly to the air conditioning unit every a first preset time interval in response to the key parameter of the air conditioning unit failing to change.

According to some embodiments of the present disclosure, the parameter backup module backing up at least the changed key parameter of the air conditioning unit is specifically configured to: in response to a determination that a storage capacity of the networking module corresponding to the air conditioning unit is less than a second preset capacity threshold, send the changed key parameter of the air conditioning unit to the cloud server for backup.

In order to achieve the above-mentioned object, an embodiment of an eighth aspect of the present disclosure provides a backup data acquisition system for an air conditioning unit, including: the parameter backup apparatus for the air conditioning unit of the embodiment of the seventh aspect configured to determine backup data; a communication module configured to establish, in response to a motherboard of a failed device in the air conditioning unit being replaced, a communication connection between the failed device and an upper computer, and an acquisition module configured to acquire a list of key parameters needing to be set, and acquire a corresponding key parameter from the backup data according to the list of key parameters.

According to the backup data acquisition system for the air conditioning unit in the embodiment of the present disclosure, the parameter backup apparatus for an air conditioning unit in the embodiment of the seventh aspect determines the backup data. The acquisition module establishes, in response to a motherboard of a failed device in the air conditioning unit being replaced, a communication connection between the failed device and an upper computer. The acquisition module acquires a list of key parameters needing to be set, and acquires a corresponding key parameter from the backup data according to the list of key parameters. Thus, the system can easily and quickly realize the recovery of the key parameter, so as to achieve the purpose of intelligently and quickly replacing an after-sales motherboard.

In addition, the backup data acquisition system for the air conditioning unit according to the above-mentioned embodiment of the present disclosure may further have the following additional technical features.

According to some embodiments of the present disclosure, the acquisition module acquiring the corresponding key parameter from the backup data according to the list of key parameters is specifically configured to: acquire the corresponding key parameter from the networking module according to the list of key parameters; and in response to failing to acquire the corresponding key parameter from the networking module, acquires the corresponding key parameter from a cloud server.

Additional aspects and advantages of the present disclosure will be set forth in part in the description, and in part will be apparent from the description or may be learned by practice of the present disclosure.

### BRIEF DESCRIPTION OF DRAWINGS

Fig. 1 is a flowchart of a parameter backup method for an air conditioning unit according to some embodiments of the present disclosure;
Fig. 2 is a flowchart of a backup data acquisition method for an air conditioning unit according to some embodiments of the present disclosure;
Fig. 3 is a schematic diagram of a system for the backup data acquisition method for the air conditioning unit according to some embodiments of the present disclosure;
Fig. 4 is a schematic block diagram of an electronic device according to some embodiments of the present disclosure;
Fig. 5 is a schematic block diagram of a terminal device according to some embodiments of the present disclosure;
Fig. 6 is a schematic block diagram of a parameter backup apparatus for an air conditioning unit according to some embodiments of the present disclosure; and
Fig. 7 is a schematic block diagram of a backup data acquisition system for an air conditioning unit according to some embodiments of the present disclosure;

### DESCRIPTION OF EMBODIMENTS

Reference will now be made in detail to the embodiments of the present disclosure, examples of which are illustrated in the accompanying drawings, through which same or similar reference numerals refer to the same or similar elements or elements with the same or similar functions. The embodiments described below with reference to the figures are exemplary and are intended to be illustrative of the present disclosure and are not to be construed as limiting the present disclosure.

A parameter backup method for an air conditioning unit, a backup data acquisition method for an air conditioning unit, a computer-readable storage medium, an electronic device, a terminal device, a parameter backup apparatus for an air conditioning unit and a backup data acquisition system for an air conditioning unit provided in the embodiments of the present disclosure are described below with reference to the drawings.

With the popularity of intelligence, the existing air conditioning units gradually enter the on-line intelligent control phase. For the convenience of data communication and the standardization of production, each outdoor unit is usually provided with a networking module for acquiring the operation data of the outdoor unit and uploading the operation data of the outdoor unit to the cloud server in real time. The networking module can be a 4G (The 4th Generation Mobile Communication Technology) communication module, a 5G (The 5th Generation Mobile Communication Technology) communication module, or a wifi (wireless network communication technology) communication module, and the networking module uploads the operation data of the air conditioning unit to the cloud server via a mobile network or a wireless network.

In some embodiments of the present disclosure, the air conditioning unit includes a plurality of outdoor units and a networking module corresponding to each outdoor unit, and the air conditioning unit combines in parallel the plurality of outdoor units into one system and communicates based on a bus communication principle. In the communication process, in order to facilitate the control of the indoor and outdoor units of the air conditioning unit, the plurality of outdoor units is divided into a master outdoor unit and a slave outdoor unit, each outdoor unit is connected to at least one indoor unit, and when receiving a control command, the master outdoor unit distributes the control command to the corresponding slave outdoor unit so as to control the operation state of the corresponding indoor unit. In the data uploading process, each slave outdoor unit collects the operation data of the corresponding indoor unit, and sends the collected operation data to the master outdoor unit, and then the master outdoor unit uploads the operation data to the cloud server; and since each outdoor unit is provided with a networking module, the slave outdoor unit uploads the operation data to the cloud server while sending the operation data to the master outdoor unit.

Since more and more parameter information of the air conditioning unit occurs, when the motherboard of the air conditioning unit is damaged and needs to be replaced, there is a problem that a historical parameter is easily lost or cannot be retrieved, which results in that after-sales engineers need to go through a lot of dialling settings during the maintenance process, or a very complicated debugging and recovery process (especially when the motherboard has no physical dialling settings) to restore the replaced motherboard to the previous state. Therefore, when the parameter information of the air conditioning unit changes, the changed parameter information needs to be backed up to facilitate the later maintenance of the device and reduce the maintenance pressure.

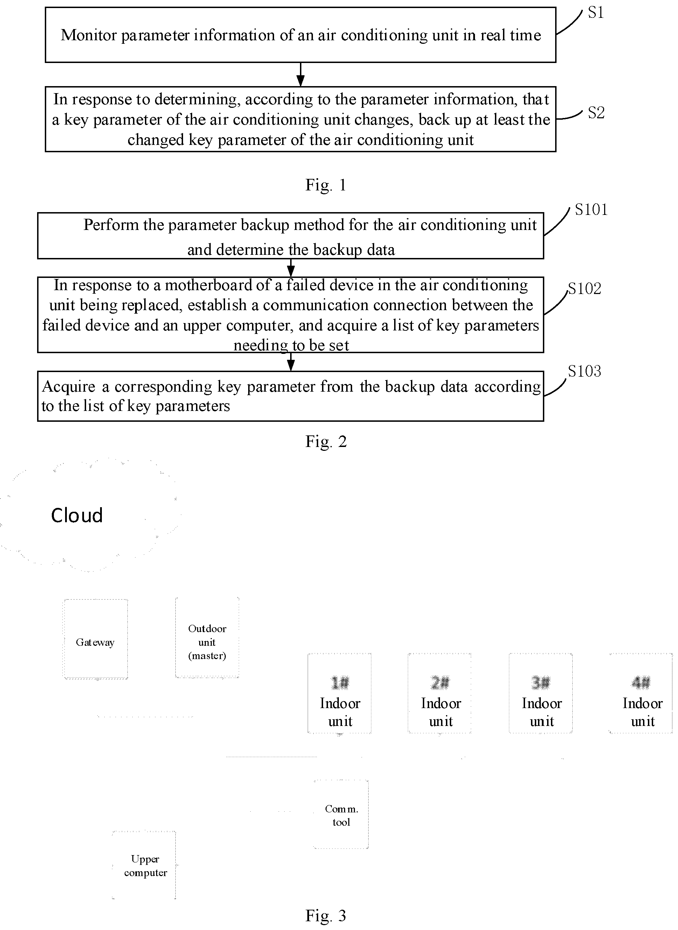

Fig. 1 is a flowchart of a parameter backup method for an air conditioning unit according to some embodiments of the present disclosure.

As shown in Fig. 1, the parameter backup method for an air conditioning unit according to an embodiment of the present disclosure may include the following actions.

At block S 1, parameter information of an air conditioning unit is monitored in real time.

In some embodiments of the present disclosure, a large amount of parameter information for an air conditioning unit occurs, and all indoor and outdoor units may generate hundreds or thousands of pieces of parameter information over a period of time. In order to facilitate the gateway to monitor the parameter information of the air conditioning unit in real time and ensure the reliable operation of the air conditioning unit, the parameter information of the air conditioning unit can be divided into two parts: a key parameter and a functional parameter. The key parameters may include parameters being strongly related to physical components and affecting the operation of the device, such as the quantity of compressors of the outdoor unit, the quantity of indoor units connected to the outdoor unit, the identity of the outdoor unit (such as SN code), the identity of the indoor unit (SN code or indoor unit address), etc.; and the functional parameters include the parameters which affect the function of the device and are weakly related to the physical components, such as the functional parameter information of refrigeration shutdown return difference of the indoor unit, an outlet static pressure of the indoor/outdoor unit, a target operating frequency of the indoor unit and a target temperature of the indoor unit.

At block S2, in response to determining, according to the parameter information, that a key parameter of the air conditioning unit changes, at least the changed key parameter of the air conditioning unit is backed up.

That is to say, when it is monitored that the parameter information of the air conditioning unit changes, the changed parameter is backed up. For example, when the quantity of compressors of the outdoor unit changes, the quantity of compressors is backed up. When the quantity of compressors changes, other operating parameters of the air conditioning unit will change, such as a return air temperature of the compressor, a refrigerating capacity of the indoor unit, a refrigerant flow rate of the indoor unit, etc. At this time, whether to backup these parameters needs to be determined according to the storage capacity of the gateway module or determined according to the requirements of the cloud server.

How parameters are backed up is described in detail below.

According to some embodiments of the present disclosure, said backing up at least the changed key parameter of the air conditioning unit includes: determining a storage capacity of a networking module corresponding to the air conditioning unit; in response to a determination that the storage capacity is less than or equal to a first preset capacity threshold, backing up the changed key parameter in the air conditioning unit; and in response to a determination that the storage capacity is greater than the first preset capacity threshold, backing up the changed key parameter of the air conditioning unit and a changed functional parameter of the air conditioning unit. The first preset capacity threshold can be determined according to actual situations, and the networking module can be a gateway.

Specifically, the networking module is used to monitor the parameter information of the indoor unit and the outdoor unit in real time, and when it is determined that a set key parameter of a certain indoor unit or outdoor unit changes, or a certain outdoor unit executes a special operation state, for example, for the trial operation for debugging the operation of the indoor and outdoor units, the current key set parameters of the indoor and outdoor units which change are backed up. The backup manner can be recorded inside the networking module in a cached or fixed storage manner. When the key set parameters are backed up, considering the storage capacity of the gateway, i.e. the gateway with a larger capacity can not only store the changed key parameters of the air conditioning unit, but also store the changed functional parameters, while the gateway with a smaller capacity can only store the changed key parameters of the air conditioning unit, so as to ensure that the key parameter information can be quickly obtained when a motherboard of the air conditioning unit is replaced in the event of a motherboard failure.

It should be noted that the networking module can function as a local black box to back up the changed key parameters of the air conditioning unit in a fixed storage manner and store the same in the gateway. In this way, when there is no cloud server to store, for example in the overseas complex network environment and partial areas where cloud services are not allowed, the key parameter information can be stored so as to restore according to the data backed up in the networking module when the device fails, and the normal operation of the air conditioning unit is also ensured to the maximum extent.

In the case where there is cloud server storage, according to some embodiments of the present disclosure, the parameter backup method for the air conditioning unit described above further includes: uploading the backup data to a cloud server.

According to some embodiments of the present disclosure, the backup data in the networking module is cleared in response to receiving an upload success instruction from the cloud server.

Specifically, if the network is connected and the network state is good, the networking module will report the backup data to the cloud server according to a certain reporting mode. The reporting mode includes a fixed uploading period, such as reporting once a day or reporting once every two days; or when the key parameter changes, reporting the key parameter multiple times until receiving a confirmation instruction from the cloud server to stop reporting, and when the key parameter does not change, reporting according to a fixed time; alternatively, the networking module reports the backup data when receiving the query instruction of the cloud server.

If the storage capacity of the networking module is not large, when the cloud server successfully receives the backup data, a backup data clearing instruction can be sent to the networking module. In this way, the storage space of the networking module can be saved, preventing the backup data in the next time from being unable to be cached or backed up. If the storage capacity of the networking module is large, when the cloud server successfully receives the backup data, a backup data instruction for clearing the functional parameter can be sent to the networking module, which can not only save the storage space of the networking module, but also ensure that the networking module also stores the backup data of the key parameter, so that when the motherboard is replaced and the networking module cannot communicate with the cloud server, the backup data can also be directly obtained from the networking module.

According to some embodiments of the present disclosure, the method further includes, prior to said determining, according to the parameter information, that a key parameter of the air conditioning unit changes: receiving a key parameter change instruction issued by the cloud server, and sending the key parameter change instruction to the air conditioning unit.

According to some embodiments of the present disclosure, the key parameter change instruction is sent repeatedly to the air conditioning unit every a first preset time interval in response to the key parameter of the air conditioning unit failing to change. The first preset time can be determined according to actual situations.

Specifically, the networking module is further configured to monitor command information in the cloud server in real time. When receiving a key parameter change instruction sent by the cloud server, the networking module issues a change instruction to the air conditioning unit at first, and at the same time continues to monitor the actual change situation of the key parameter of the indoor unit and the outdoor unit. After the key parameter changes, the key set parameter is updated and backed up in a fixed storage (a networking module with the fixed storage); and if the key parameter does not change, the command is repeatedly issued to the air conditioning unit at a certain time interval (a first preset time) until the key parameter changes. The time interval may be any value from 30s to 120s, taking into account the interval of the communication delay.

It needs to be stated that, when receiving a functional parameter change instruction sent by the cloud server, the networking module firstly sends the change instruction to the control unit, and at the same time monitors whether the actual functional parameters of the indoor unit and the outdoor unit change, if not, monitoring is continued, and if the change occurs, when the storage space of the networking module is large enough, the functional parameter can also be backed up, and the functional parameter is uploaded to the cloud server.

According to some embodiments of the present disclosure, said backing up at least the changed key parameter of the air conditioning unit includes: in response to a determination that the storage capacity of the networking module corresponding to the air conditioning unit is less than a second preset capacity threshold, sending the changed key parameter in the air conditioning unit to the cloud server for backup. The second preset capacity threshold may be determined according to actual situations.

That is to say, if the storage capacity of the networking module corresponding to the air conditioning unit is small (the storage capacity of the gateway is smaller than the second preset capacity threshold), when receiving the change instruction from the cloud server, the networking module only issues the change instruction to the air conditioning unit but does not perform parameter backup, and the parameter backup process is performed by the cloud server. That is, when the networking module monitors that the parameter information of the indoor and outdoor units changes, the parameter information is directly sent to the cloud server, and the cloud server records and saves the changed parameter information.

To this end, the parameter backup method for an air conditioning unit according to an embodiment of the present disclosure is capable of backing up in time when a key parameter changes, facilitating device maintenance at a later stage and relieving maintenance pressure.

Corresponding to the above-mentioned embodiments, the present disclosure further provides a backup data acquisition method for an air conditioning unit.

As shown in Fig. 2, the backup data acquisition for the air conditioning unit according to an embodiment of the present disclosure may include the following actions.

At block S 101, the parameter backup method for the air conditioning unit is performed and the backup data is determined.

At block S 102, in response to a motherboard of a failed device in the air conditioning unit being replaced, a communication connection is established between the failed device and an upper computer, and a list of key parameters needing to be set is acquired.

Specifically, firstly, the backup data is determined by executing the parameter backup method for the air conditioning unit. When the motherboard of a certain device in the air conditioning unit has a fault and needs to be replaced, as shown in Fig. 3, such as, when the motherboard of the indoor unit 1 has a fault, in order to ensure that the previously used parameter configuration information is not lost, when after-sales personnel replace the motherboard, firstly, a communication connection is performed with the indoor unit 1 via a communication tool, so as to realize that communication is established between the failed device and the upper computer; and at the same time as the connection is established with the communication tool, the upper computer can also receive information from a cloud server after connecting to a local area network and receive information from the gateway via a local area network or a physical communication connection. The communication tool can be: tool device such as WIFI, bluetooth, 4G or self-contained wire controller with external communication function in the indoor unit; the upper computer can be a mobile phone application program, a WeChat applet, computer software, etc.

When the communication connection between the upper computer and the failed device is established, the upper computer preferentially acquires a list of key parameters to be set. The list of key parameters can be acquired by the cloud server, or a preset key parameter list needing to be set can be parsed out by a protocol parsing mechanism self-contained in the upper computer according to a corresponding protocol after connection to a fault device via a communication tool.

At block S103, a corresponding key parameter is acquired from the backup data according to the list of key parameters.

According to some embodiments of the present disclosure, said acquiring the corresponding key parameter from the backup data according to the list of key parameters includes: acquiring the corresponding key parameter from the networking module according to the list of key parameters; and in response to failing to acquire the corresponding key parameter from the networking module, acquiring the corresponding key parameter from the cloud server.

Specifically, through the above-mentioned action at block S 102, the list of key parameters covered by the device communication protocol is acquired, and since the backup data in the networking module can characterize the real parameter of the previous operation of the device, the key parameters are preferentially acquired from the backup data in the networking module. If the corresponding key parameter cannot be obtained from the networking module, the backup data is acquired from the cloud server. The backup data at the cloud server is the updated key parameter that is uploaded to the cloud server by the networking module. If the cloud server fails to obtain the corresponding key parameter, such as the case where the mobile phone fails to establish a connection with the cloud server or the computer fails to establish a connection with the cloud server, a corresponding list of key parameters to be filled is provided for the after-sales engineer to manually input. In addition, when the backup data in the cloud server is not the backup data of the updated key parameters that is uploaded by the networking module, the sales or manufacturer may also be consulted, and the corresponding factory setting parameters are obtained from the production source of the device for use as backup information. Finally, the key parameter information is confirmed and the backup information is set and written on the motherboard, so as to complete the whole after-sales board replacement process of the failed device.

In summary, the backup data acquisition method for an air conditioning unit of the present disclosure can easily and quickly realize the recovery of key parameters, so as to achieve the purpose of intelligently and quickly replacing an after-sales motherboard.

Corresponding to the embodiments described above, the present disclosure further provides a computer-readable storage medium.

The computer-readable storage medium of the present disclosure has stored thereon a parameter backup program for an air conditioning unit. The parameter backup program for the air conditioning unit, when executed by a processor, implements the parameter backup method for the air conditioning unit described above.

The computer-readable storage medium of the embodiment of the present disclosure, by performing the parameter backup method for the air conditioning unit, is capable of backing up in time when a key parameter changes, facilitating device maintenance at a later stage and relieving maintenance pressure.

In accordance with the foregoing embodiments, the present disclosure further provides an electronic device.

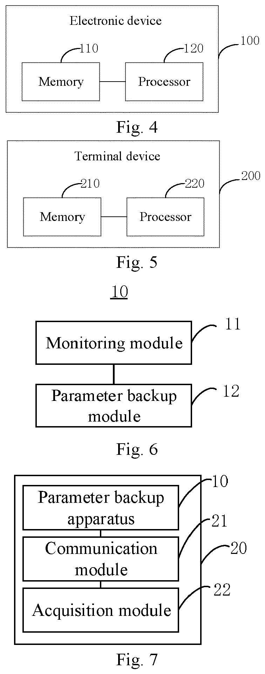

As shown in Fig. 4, an embodiment of the present disclosure provides an electronic device 100, including a memory 110, a processor 120 and a parameter backup program for an air conditioning unit. The parameter backup program is stored on the memory 110 and executable on the processor 120, and the processor 120, when executing the parameter backup program for the air conditioning unit, implements the parameter backup method for the air conditioning unit described above.

The electronic device according to the embodiment of the present disclosure, by performing the parameter backup method for the air conditioning unit, is capable of backing up in time when a key parameter changes, facilitating device maintenance at a later stage and relieving maintenance pressure.

Corresponding to the embodiments described above, the present disclosure further provides a computer-readable storage medium.

The computer-readable storage medium of the present disclosure has stored thereon a backup data acquisition program for an air conditioning unit. The backup data acquisition program for the air conditioning unit, when executed by a processor, implements the backup data acquisition method for the air conditioning unit described above.

The computer-readable storage medium of the embodiment of the present disclosure, by performing the backup data acquisition method for the air conditioning unit, is capable of backing up in time when a key parameter changes, facilitating device maintenance at a later stage and relieving maintenance pressure.

In accordance with the foregoing embodiments, the present disclosure further provides a terminal device.

As shown in Fig. 5, an embodiment of the present disclosure provides an electronic terminal 200, including a memory 210, a processor 220 and a backup data acquisition program for an air conditioning unit. The backup data acquisition program is stored on the memory 210 and executable on the processor 220, and the processor 220, when executing the backup data acquisition program for the air conditioning unit, implements the backup data acquisition method for the air conditioning unit described above.

By executing the above-mentioned backup data acquisition method for the air conditioning unit, the terminal device of the embodiments of the present disclosure can easily and quickly realize the recovery of key parameters, so as to achieve the purpose of intelligently and quickly replacing an after-sales motherboard.

Corresponding to the above embodiments, the present disclosure further provides a parameter backup apparatus for an air conditioning unit.

As shown in Fig. 6, the parameter backup apparatus 10 for an air conditioning unit of the embodiment of the present disclosure may include: a monitoring module 11 and a parameter backup module 12.

The monitoring module 11 is configured to monitor parameter information of the air conditioning unit in real time. The parameter backup module 12 is configured to back up, in response to determining, according to the parameter information, that a key parameter of the air conditioning unit changes, at least the changed key parameter of the air conditioning unit.

In some embodiments of the present disclosure, the air conditioning unit includes a plurality of outdoor units and a networking module corresponding to each outdoor unit, and the air conditioning unit combines in parallel the plurality of outdoor units into one system and communicates based on a bus communication principle. In the communication process, in order to facilitate the control of the indoor and outdoor units of the air conditioning unit, the plurality of outdoor units is divided into a master outdoor unit and a slave outdoor unit, each outdoor unit is connected to at least one indoor unit, and when receiving a control command, the master outdoor unit distributes the control command to the corresponding slave outdoor unit so as to control the operation state of the corresponding indoor unit. In the data uploading process, each slave outdoor unit collects the operation data of the corresponding indoor unit, and sends the collected operation data to the master outdoor unit, and then the master outdoor unit uploads the operation data to the cloud server; and since each outdoor unit is provided with a networking module, the slave outdoor unit uploads the operation data to the cloud server while sending the operation data to the master outdoor unit.

Since more and more parameter information of the air conditioning unit occurs, when the motherboard of the air conditioning unit is damaged and needs to be replaced, there is a problem that the historical parameters are easily lost or cannot be retrieved, which results in that after-sales engineers need to go through a lot of dialling settings during the maintenance process, or a very complicated debugging and recovery process (especially when the motherboard has no physical dialling settings) to restore the replaced motherboard to the previous state. Therefore, when the parameter information of the air conditioning unit changes, the changed parameter information needs to be backed up to facilitate the later maintenance of the device and reduce the maintenance pressure.

Specifically, in some embodiments of the present disclosure, and all indoor and outdoor units may generate hundreds or thousands of pieces of parameter information over a period of time. In order to facilitate the gateway to monitor the parameter information of the air conditioning unit in real time and ensure the reliable operation of the air conditioning unit, the parameter information of the air conditioning unit can be divided into two parts: a key parameter and a functional parameter. The key parameters may include parameters being strongly related to physical components and affecting the operation of the device, such as the quantity of compressors of the outdoor unit, the quantity of indoor units connected to the outdoor unit, the identity of the outdoor unit (such as SN code), the identity of the indoor unit (SN code or indoor unit address), etc.; and the functional parameters include the parameters which affect the function of the device and are weakly related to the physical components, such as the functional parameter information of refrigeration shutdown return difference of the indoor unit, an outlet static pressure of the indoor/outdoor unit, a target operating frequency of the indoor unit and a target temperature of the indoor unit.

That is to say, when it is monitored that the parameter information of the air conditioning unit changes by the monitoring module 11, the changed parameter is backed up by the parameter backup module 12. For example, when the quantity of compressors of the outdoor unit changes, the quantity of compressors is backed up by the parameter backup module 12. When the quantity of compressors changes, other operating parameters of the air conditioning unit will change, such as a return air temperature of the compressor, a refrigerating capacity of the indoor unit, a refrigerant flow rate of the indoor unit, etc. At this time, whether to backup these parameters by the parameter backup module 12 needs to be determined according to the storage capacity of the gateway module or determined according to the requirements of the cloud server.

How parameters are backed up by the parameter backup module 12 is described in detail below.

Specifically, the detection module 11 is configured to monitor the parameter information of the indoor unit and the outdoor unit in real time, and when it is determined that a set key parameter of a certain indoor unit or outdoor unit changes, or a certain outdoor unit executes a special operation state, for example, for the trial operation for debugging the operation of the indoor and outdoor units, the current key set parameters of the indoor and outdoor units which change are backed up by the parameter backup module 12. When the key set parameters are backed up by the parameter backup module 12, the gateway with a larger capacity can not only store the changed key parameters of the air conditioning unit, but also store the changed functional parameters, while the gateway with a smaller capacity can only store the changed key parameters of the air conditioning unit, so as to ensure that the key parameter information can be quickly obtained when a motherboard of the air conditioning unit is replaced in the event of a motherboard failure.

It should be noted that the networking module can function as a local black box to back up the changed key parameters of the gateway in a fixed storage manner and store the same in the gateway. In this way, when there is no cloud server to store, for example in the overseas complex network environment and partial areas where cloud services are not allowed, the key parameter information can be stored so as to restore according to the data backed up in the networking module when the device fails, and the normal operation of the air conditioning unit is also ensured to the maximum extent.

If the network is connected and the network state is good, the networking module will report the backup data to the cloud server according to a certain reporting mode. The reporting mode includes a fixed uploading period, such as reporting once a day or reporting once every two days; or when the key parameter changes, reporting the key parameter multiple times until receiving a confirmation instruction from the cloud server to stop reporting, and when the key parameter does not change, reporting according to a fixed time; alternatively, the networking module reports the backup data when receiving the query instruction of the cloud server.

If the storage capacity of the networking module is not large, when the cloud server successfully receives the backup data, a backup data clearing instruction can be sent to the networking module by the parameter backup module 12. In this way, the storage space of the networking module can be saved, preventing the backup data in the next time from being unable to be cached or backed up. If the storage capacity of the networking module is large, when the cloud server successfully receives the backup data, a backup data instruction for clearing the functional parameter can be sent to the networking module by the parameter backup module 12, which can not only save the storage space of the networking module, but also ensure that the networking module also stores the backup data of the key parameter, so that when the motherboard is replaced and the networking module cannot communicate with the cloud server, the backup data can also be directly obtained from the networking module.

That is to say, if the storage capacity of the networking module corresponding to the air conditioning unit is small, when receiving the change instruction of the cloud server, the networking module only issues the change instruction to the air conditioning unit but does not perform parameter backup, and the parameter backup process is performed by the cloud server. That is, when the networking module monitors that the parameter information of the indoor and outdoor units changes, the parameter information is directly sent to the cloud server by the parameter backup module 12, and the cloud server records and saves the changed parameter information.

It should be noted that for the details not disclosed in the parameter backup apparatus for an air conditioning unit according to an embodiment of the present disclosure, reference can be made to the details disclosed in the parameter backup method for an air conditioning unit according to an embodiment of the present disclosure, and the detailed description thereof will not be repeated here.

The parameter backup apparatus for an air conditioning unit according to an embodiment of the present disclosure is capable of backing up in time when a key parameter changes, facilitating device maintenance at a later stage and relieving maintenance pressure.

Corresponding to the above-mentioned embodiments, the present disclosure further provides a backup data acquisition system for an air conditioning unit.

As shown in Fig. 7, the backup data acquisition system 20 for the air conditioning unit of an embodiment of the present disclosure may include: a parameter backup apparatus 10 for an air conditioning unit, a communication module 22 and an acquisition module 23.

The parameter backup apparatus 10 for the air conditioning unit determines backup data. The communication module 22 is configured to establish, in response to a motherboard of a failed device in the air conditioning unit being replaced, a communication connection between the failed device and an upper computer. The acquisition module 23 is configured to acquire a list of key parameters needing to be set and acquire a corresponding key parameter from the backup data according to the list of key parameters.

Specifically, firstly, the parameter backup apparatus 10 for the air conditioning unit determines the backup data by executing the parameter backup method for the air conditioning unit. When the motherboard of a certain device in the air conditioning unit has a fault and needs to be replaced, as shown in Fig. 3, such as, when the motherboard of the indoor unit 1 has a fault, in order to ensure that the previously used parameter configuration information is not lost, when after-sales personnel replace the motherboard, firstly, a communication connection is performed with the indoor unit 1 via a communication tool by the communication module 22, so as to realize that the failed device establishes communication with the upper computer; and at the same time as the connection is established with the communication tool, the upper computer can also receive information from a cloud server after connecting to a local area network and receive information from the gateway via a local area network or a physical communication connection. The communication tool can be: tool device such as WIFI, bluetooth, 4G or self-contained wire controller with external communication function in the indoor unit; the upper computer can be a mobile phone application program, a WeChat applet, computer software, etc.

When the communication connection between the upper computer and the failed device is established, the upper computer preferentially acquires a list of key parameters to be set. The list of key parameters can be acquired by the cloud server, or a preset key parameter list needing to be set can be parsed out by a protocol parsing mechanism self-contained in the upper computer according to a corresponding protocol after connection to a fault device via a communication tool.

The acquisition module 23 acquires the list of key parameters covered by the device communication protocol, and since the backup data in the networking module can characterize the real parameter of the previous operation of the device, the acquisition module acquires key parameter preferentially from the backup data in the networking module. If the acquisition module 23 cannot obtain the corresponding key parameter from the networking module, the acquisition module 23 acquires the backup data from the cloud server. The backup data at the cloud server is the updated key parameter that is uploaded to the cloud server by the networking module. If the cloud server fails to obtain the corresponding key parameter, such as the case where the mobile phone fails to establish a connection with the cloud server or the computer fails to establish a connection with the cloud server, a corresponding list of key parameters to be filled is provided for the after-sales engineer to manually input. In addition, when the backup data in the cloud server is not the backup data of the updated key parameters that is uploaded by the networking module, the sales or manufacturer may also be consulted, and the corresponding factory setting parameters are obtained from the production source of the device for use as backup information. Finally, the key parameter information is confirmed and the backup information is set and written on the motherboard, so as to complete the whole after-sales board replacement process of the failed device.

It should be noted that for the details not disclosed in the backup data acquisition system for the air conditioning unit according to an embodiment of the present disclosure, reference can be made to the details disclosed in the backup data acquisition method for the air conditioning unit according to an embodiment of the present disclosure, and the detailed description thereof will not be repeated here.

The backup data acquisition system for the air conditioning unit of the present disclosure can easily and quickly realize the recovery of key parameters, so as to achieve the purpose of intelligently and quickly replacing an after-sales motherboard.

It should be noted that the logic and/or steps represented in the flowcharts or otherwise described herein, e.g. an ordered listing of executable instructions that can be thought of as implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this specification, a "computer-readable medium" can be any means that can contain, store, communicate, propagate, or transport the program for use by or in connection with the instruction execution system, apparatus, or device. More specific examples (a non-exhaustive list) of computer-readable media include the following: an electrical connection (electronic device) having one or more wirings, a portable computer disc cartridge (magnetic device), a random access memory (RAM), a read-only memory (ROM), an erasable programmable read-only memory (EPROM or flash memory), an optical fiber device, and a portable optical disc read-only memory (CDROM). In addition, the computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

It should be understood that portions of the present disclosure may be implemented in hardware, software, firmware, or a combination thereof. In the embodiments described above, the steps or methods may be implemented in software or firmware stored in memory and executed by a suitable instruction execution system. For example, if implemented in hardware, as in another embodiment, it may be implemented using any one or combination of the following techniques known in the art: discrete logic circuits having logic gates for implementing logic functions on data signals, application specific integrated circuits having appropriate combinational logic gates, programmable gate arrays (PGA), field programmable gate arrays (FPGA), and the like.

In the description of this specification, references to descriptions of the terms "an embodiment", "some embodiments", "examples", "specific examples", or "some examples", etc. mean that a particular feature, structure, material, or characteristic described in connection with the embodiment or example is included in at least one embodiment or example of the present disclosure. In this specification, schematic representations of the above-mentioned terms are not necessarily directed to the same embodiment or example. Furthermore, the particular features, structures, materials, or characteristics described may be combined in any suitable manner in any one or more embodiments or examples.

While embodiments of the present disclosure have been shown and described, it will be understood that the above-described embodiments are exemplary and cannot be understood as being restrictive, and changes, modifications, substitutions and alterations may be made by those skilled in the art without departing from the scope of the present disclosure.

## Claims

1. A parameter backup method for an air conditioning unit, comprising:
monitoring parameter information of the air conditioning unit in real time; and
in response to determining, according to the parameter information, that a key parameter of the air conditioning unit changes, backing up at least the changed key parameter of the air conditioning unit.

2. The method according to claim 1, wherein said backing up at least the changed key parameter of the air conditioning unit comprises:
determining a storage capacity of a networking module corresponding to the air conditioning unit;
in response to a determination that the storage capacity is less than or equal to a first preset capacity threshold, backing up the changed key parameter of the air conditioning unit; and
in response to a determination that the storage capacity is greater than the first preset capacity threshold, backing up the changed key parameter of the air conditioning unit and a changed functional parameter of the air conditioning unit.

3. The method according to claim 1 or 2, further comprising:
uploading the backup data to a cloud server.

4. The method according to claim 3, wherein the backup data in the networking module is cleared in response to receiving an upload success instruction from the cloud server.

5. The method according to claim 3, further comprising, prior to said determining that the key parameter of the air conditioning unit changes according to the parameter information:
receiving a key parameter change instruction issued by the cloud server, and sending the key parameter change instruction to the air conditioning unit.

6. The method according to claim 5, wherein the key parameter change instruction is repeatedly sent to the air conditioning unit every a first preset time interval in response to the key parameter of the air conditioning unit failing to change.

7. The method according to claim 5, wherein said backing up at least the changed key parameter of the air conditioning unit comprises:
in response to a determination that the storage capacity of a networking module corresponding to the air conditioning unit is less than a second preset capacity threshold, sending the changed key parameter of the air conditioning unit to the cloud server for backup.

8. A backup data acquisition method for an air conditioning unit, comprising:
executing a parameter backup method for an air conditioning unit according to any one of claims 1-7, and determining the backup data;
in response to a motherboard of a failed device in the air conditioning unit being replaced, establishing a communication connection between the failed device and an upper computer, and acquiring a list of key parameters needing to be set; and
acquiring a corresponding key parameter from the backup data according to the list of key parameters.

9. The method according to claim 8, wherein said acquiring the corresponding key parameter from the backup data according to the list of key parameters comprises:
acquiring the corresponding key parameter from the networking module according to the list of key parameters; and
in response to failing to acquire the corresponding key parameter from the networking module, acquiring the corresponding key parameter from the cloud server.

10. A computer-readable storage medium, having a parameter backup program for an air conditioning unit stored thereon, wherein the parameter backup program for the air conditioning unit, when executed by a processor, implements a parameter backup method for the air conditioning unit according to any one of claims 1-7.

11. An electronic device, comprising a memory, a processor and a parameter backup program for an air conditioning unit, the parameter backup program being stored on the memory and executable on the processor, wherein the processor, when executing the parameter backup program for the air conditioning unit, implements a parameter backup method for the air conditioning unit according to any one of claims 1-7.

12. A computer-readable storage medium, having a backup data acquisition program for an air conditioning unit stored thereon, wherein the backup data acquisition program for the air conditioning unit, when executed by a processor, implements a backup data acquisition method for the air conditioning unit according to any one of claims 8-9.

13. A terminal device, comprising a memory, a processor and a backup data acquisition program for an air conditioning unit, the backup data acquisition program being stored on the memory and executable on the processor, wherein the processor, when executing the backup data acquisition program for the air conditioning unit, implements a backup data acquisition method for the air conditioning unit according to claim 8 or 9.

14. A parameter backup apparatus for an air conditioning unit, comprising:
a monitoring module configured to monitor parameter information of the air conditioning unit in real time; and
a parameter backup module configured to back up, in response to determining, according to the parameter information, that a key parameter of the air conditioning unit changes, at least the changed key parameter of the air conditioning unit.

15. A backup data acquisition system for an air conditioning unit, the backup data acquisition system comprising:
a parameter backup apparatus for the air conditioning unit according to claim 14, configured to determine the backup data;
a communication module configured to establish, in response to a motherboard of a failed device in the air conditioning unit being replaced, a communication connection between the failed device and an upper computer; and
an acquisition module configured to acquire a list of key parameters needing to be set, and acquire a corresponding key parameter from the backup data according to the list of key parameters.
